# EUROPEAN PATENT APPLICATION

(11) **EP 2 259 536 A1**
(43) Date of publication of application: **08.12.2010**
(21) Application number: 10164660.2
(22) Date of filing: 01.06.2010
(51) Int. Cl.: H04L 29/06

(54) **Rapid item authentication via conventional communication channels**

(30) Priority: 02.06.2009 US 476728
(71) Applicant: Accenture Global Services GmbH, 8200 Schaffhausen (CH)
(72) Inventor: Schmidt, Paul J., BROOKFIELD, WI 53005 (US); Weirup, Christopher, CHICAGO, IL 60654 (US); Pugh, Scott B., CHARLOTTE, NC 28273 (US); Rosenblum, Ian, WALTHAM, MA 02452 (US)
(74) Representative: de Beaumont, Michel

(57) **Abstract**

An authentication manager is provided that is accessible by a mobile wireless device through conventional networks. The mobile wireless device is configured to obtain information regarding at least one identification code displayed on an item and send such information to a the authentication manager. In response, authentication manager provides authentication information to the mobile wireless device. The authentication information indicates whether the at least one identification (and, by implication, the item to which it corresponds) is authentic or not. Additional information regarding the item may also be provided by the authentication manager. The authentication manager can decode and/or translate any received information regarding the at least one identification code as needed. The authentication manager provides the information regarding the at least one identification code to an authenticating entity that returns the authentication information to the authentication manager. Likewise, the additional information may also be provided by the authenticating entity.

## Description

### FIELD OF THE INVENTION

The instant disclosure relates generally to the authentication of items in supply chains and, in particular, to the authentication of such items using conventional communication channels such as a mobile wireless device.

### BACKGROUND OF THE INVENTION

The use of supply chains for moving items, particularly vendable items, to their final destinations is well known in the art. Using supply chain management techniques, manufacturers work to ensure that their goods ultimately arrive at the designated destination in a timely and efficient manner. For example, in a simplified case of a drug manufacturer, drugs created at a factory may be packaged and shipped to a specific regional distributor. Thereafter, the regional distributor can route the delivered drugs as necessary to meet the demands of local distributors and/or retailers. By tracking movements of the packages drugs from the manufacturer to the regional distributor, and from the regional distributor to the local distributors/retailers, the manufacturer can, in theory, determine where the drug is going.

While supply chain management is a well-established discipline, it is not perfect and problems do exist. For example, and again referring to the drug manufacturer example, a dishonest distributor can report legitimate deliveries while actually diverting the packaged drugs to other, more profitable markets. Additionally, dishonest retailers can likewise divert genuine drugs while substituting fake drugs packaged to look like legitimate drugs. In either case, because the drug manufacturer must rely on the honesty of third parties, the drug manufacturer may be damaged through loss of potential revenue and/or tarnished reputation. More importantly, the consuming public may be underserved or, worse still, provided ineffective or unsafe counterfeit drugs.

More recently, the governments of various countries around the world have mandated or are planning to mandate the so-called serialization of medical items, including drugs, wherein each individual package (e.g., pill bottle) or even unit dose (i.e., an individual pill) is labeled with a unique identifier, such as a unique serial number or machine-readable code. By labeling medical items in this manner and gathering identification data as medical items progress throughout the supply chain, it is hoped that diversions of legitimate medical items, or substitution of counterfeit items, can be avoided or at least minimized. While this is an important first step to combating such fraudulent activities, further capabilities must be in place to fully realize the promise of highly traceable items. For example, it may not always be possible or practical to place the necessary equipment to gather the identification information at all points along the distribution supply chain. Even where possible, it may become quickly cost prohibitive to do so where specialized equipment is required.

Thus, approaches that permit the efficient gathering of serialized identification information for purposes of authentication while avoiding the need for specialized equipment would represent an advancement of the art.

### SUMMARY OF THE INVENTION

The instant disclosure describes various techniques, including methods, devices and systems, for authenticating items comprising at least one identification code using conventional communication channels. Using conventional communication channels, such as those available through common mobile wireless devices, authentication capability can be widely and efficiently deployed. Thus, in one embodiment, an authentication manager is provided that is accessible through conventional networks. A mobile wireless device is configured to obtain information regarding at least one identification code displayed on an item and send such information to a the authentication manager. Such information may be obtained by the mobile wireless device by virtue of receiving user inputs or capturing an image via a suitable image capture device. In various embodiments, the information is conveyed by the mobile wireless device via an email message or short message service (SMS) or text message. In response, the mobile wireless device receives authentication information corresponding to the at least one identification from the authentication manager. The authentication information indicates whether the at least one identification (and, by implication, the item to which it corresponds) is authentic or not. Where the authentication information indicates authenticity, additional information regarding the item associated with the at least one identification code may also be received by the mobile wireless device from the authentication manager. Where authenticity is not indicated, contact information may be provided thereby allowing the user of the mobile wireless device to contact an interested party, e.g., a manufacturer or government enforcement agency. Because such authentication information could be used by an adverse party to ascertain legitimate identification information, the wireless device can also send eligibility verification information that permits the authentication manager to determine whether the mobile wireless device is permitted to receive the authentication information.

Operating in conjunction with the mobile wireless device, the authentication manager, upon receiving information regarding at least one identification code, determines the authentication information regarding the at least one identification code and thereafter sends it to the mobile wireless device. Depending on the format of the information regarding the at least one identification code, the authentication manager may need to first decode or translate (or both) the received information. Regardless of the manner in which it is processed (if at all), the authentication manager provides the information regarding the at least one identification code to an authenticating entity (such as, for example, a manufacturer) that, in turn, returns the authentication information to the authentication manager. Likewise, the additional information and/or contact information may also be provided by the authenticating entity. In this manner, the authenticating entity can retain control over the authentication information. In support of the eligibility verification processing noted above, the authentication manager may be configured to gather enrollment information from an authenticating party regarding specific individuals and/or mobile wireless devices permitted to access and receive authentication information. In one embodiment, the authentication manager maintains an authentication history database, thereby permitting users to obtain historical information regarding prior authentication requests.

According to one embodiment of the present invention, there is provided a method for authenticating an item comprising at least one identification code, the method comprising: sending, by a mobile wireless device to an authentication manager, information regarding the at least one identification code; and receiving, by the mobile wireless device from the authentication manager in response to the information regarding the at least one identification code, authentication information corresponding to the at least one identification code. According to one embodiment of the present invention, the method further comprises: receiving, by the mobile wireless device, alphanumeric text constituting the information regarding the at least one identification code.

According to another embodiment of the present invention, the information regarding the at least one identification code further comprises at least one image of the at least one identification code, the method further comprising: capturing, by an image capture device associated with the mobile wireless device, the at least one image.

According to another embodiment of the present invention, the item comprises a medical item. According to another embodiment of the present invention, the method further comprises: receiving, by the mobile wireless device from the authentication manager, additional information regarding the item associated with the at least one identification code.

According to another embodiment of the present invention, the method further comprises: receiving, by the mobile wireless device from the authentication manager, contact information. According to another embodiment of the present invention, sending the information regarding the at least one identification code further comprises sending at least one of an email message and a short message service message.

According to another embodiment of the present invention, sending the information regarding the at least one identification code further comprises sending eligibility verification information that permits determination whether the wireless device is permitted to receive the validity indication.

According to a further aspect of the present invention, there is provided a method for authenticating an item comprising at least one identification code, the method comprising: receiving, by an authentication manager from a mobile wireless device, information regarding the at least one identification code; determining, by the authentication manager, authentication information regarding the at least one identification code; and sending, by the authentication manager to the mobile wireless device in response to the information regarding the at least one identification code, the authentication information corresponding to the at least one identification code.

According to an embodiment of the present invention, receiving the information regarding the at least one identification code further comprises receiving alphanumeric text input by a user of the mobile wireless device, wherein determining the authentication information further comprises: sending, by the authentication manager to an authenticating entity, the information regarding the at least one identification code; and receiving, by the authentication manager from the authenticating entity based on the information regarding the at least one identification code, the authentication information.

According to another embodiment of the present invention, determining the authentication information further comprises: translating, by the authentication manager, the information regarding the at least one identification code to provide at least one translated identification code; sending, by the authentication manager to an authenticating entity, the at least one translated identification code; and receiving, by the authentication manager from the authenticating entity based on the at least one translated identification code, the authentication information. According to another embodiment of the present invention, determining the authentication information further comprises: decoding, by the authentication manager, at least one image constituting the information regarding the at least one identification code to provide at least one decoded identification code; sending, by the authentication manager to an authenticating entity, the at least one decoded identification code; and receiving, by the authentication manager from the authenticating entity based on the least one decoded identification code, the authentication information.

According to another embodiment of the present invention, the item comprises a medical item. According to another embodiment of the present invention, the method further comprising: sending, by the authentication manager to the mobile wireless device, additional information regarding the item associated with the at least one identification code.

According to another embodiment of the present invention, the method further comprises: sending, by the authentication manager to the mobile wireless device, contact information. According to another embodiment of the present invention, receiving the information regarding the at least one identification code further comprises receiving at least one of an email message and a short message service message.

According to another embodiment of the present invention, receiving the information regarding the at least one identification code further comprises receiving eligibility verification information, the method further comprising: prior to determining the authentication information, determining, by the authentication manager based on the eligibility verification information, that the wireless device is permitted to receive the validity indication.

According to another embodiment of the present invention, the method further comprises: receiving, by the authentication manager from an authenticating entity, enrollment information, wherein determining that the wireless device is permitted to receive the authentication information further comprises determining that the eligibility verification information compares favorably with the enrollment information.

According to a further aspect of the present invention, there is provided a mobile wireless device, comprising: a wireless transceiver; at least one processor adapted to communicate with the wireless transceiver; and memory adapted to communicate with the at least one processor and having stored therein instructions that, when executed by the at least one processor, cause the at least one processor to: send, via the wireless transceiver to an authentication manager, information regarding the at least one identification code; and receive, via the wireless transceiver from the authentication manager in response to the information regarding the at least one identification code, authentication information corresponding to the at least one identification code.

According to another embodiment of the present invention, the mobile wireless device further comprises at least one user input device adapted to communicate with the at least one processor, wherein the memory further comprises instructions that, when executed by the at least one processor, cause the at least one processor to: receive, by the at least one user input device, alphanumeric text constituting the information regarding the at least one identification code. According to another embodiment of the present invention, the mobile wireless device further comprises an image capture device adapted to communicate with the at least one processor, wherein the memory further comprises instructions that, when executed by the at least one processor, cause the at least one processor to: capture, by the image capture device, at least one image of the at least one identification code, wherein the at least one image constitutes the information regarding the at least one identification code.

According to another embodiment of the present invention, the memory further comprises instructions that, when executed by the at least one processor, cause the at least one processor to: receive, via the wireless transceiver from the authentication manager, additional information regarding the item associated with the at least one identification code.

According to another embodiment of the present invention, the memory further comprises instructions that, when executed by the at least one processor, cause the at least one processor to: receive, via the wireless transceiver from the authentication manager, contact information. According to yet a further aspect of the present invention, there is provided an authentication manager comprising: a service interface component adapted to receive, from a mobile wireless device, information regarding at least one identification code associated with an item; an authenticating entity interface component; and a controller operably coupled to the service interface component and the authenticating entity interface component and adapted to send the information regarding the at least one identification code to an authenticating entity via the authenticating entity interface component, and receive authentication information from the authenticating entity in response to the information regarding the at least one identification code via the authenticating entity interface component.

According to another embodiment of the present invention, the controller is adapted to send the authentication information to the mobile wireless device via the service interface.

According to another embodiment of the present invention, the authentication manager further comprising: a translation component operably coupled to the controller and adapted to translate the information regarding the at least one identification code to provide at least one translated identification code, wherein the controller is further adapted to send the at least one translated identification code to the authenticating entity and receive the authentication information from the authenticating entity in response to the at least one translated identification code.

According to another embodiment of the present invention, the authentication manager further comprises: a decoding component operably coupled to the controller and adapted to decode at least one image constituting the information regarding the at least one identification code to provide at least one decoded identification code, wherein the controller is further adapted to send the at least one decoded identification code to the authenticating entity and receive the authentication information from the authenticating entity in response to the at least one decoded identification code.

According to another embodiment of the present invention, the controller is further adapted to receive, from the authenticating entity via the authenticating entity interface component, additional information regarding the item associated with the at least one identification code and send, via the service interface component, the additional information to the mobile wireless device.

According to another embodiment of the present invention, the controller is further adapted to receive, from the authenticating entity via the authenticating entity interface component, contact information and send, via the service interface component, the contact information to the mobile wireless device.

According to another embodiment of the present invention, the authentication manager further comprises: an enrollment component adapted to receive, from the authenticating entity, enrollment information and to store the enrollment information in an enrollment database; and a user verification component operably coupled to the controller and the enrollment database and adapted to determine that the wireless device is permitted to receive the authentication information when eligibility verification information, received by the user verification component via the controller and the service interface from the mobile wireless device, compares favorably with the enrollment information.

According to a further aspect of the present invention, there is provided a system comprising: at least one mobile wireless device; and an authentication manager operably coupled to the at least one mobile wireless device, wherein each of the at least one mobile wireless device is adapted to send information regarding at least one identification code associated with an item to the authentication manager and receive, from the authentication manager in response to the information regarding the at least one identification code, authentication information corresponding to the at least one identification code.

### BRIEF DESCRIPTION OF THE DRAWINGS

The features described in this disclosure are set forth with particularity in the appended claims. These features and attendant advantages will become apparent from consideration of the following detailed description, taken in conjunction with the accompanying drawings. One or more embodiments are now described, by way of example only, with reference to the accompanying drawings wherein like reference numerals represent like elements and in which:
FIG. 1 is a block diagram of a system including a mobile wireless device and an authentication manager in accordance with the instant disclosure;
FIG. 2 is a block diagram illustrating a representative implementation of a mobile wireless device in accordance with the instant disclosure;
FIG. 3 is a block diagram illustrating in greater detail a representative embodiment of an authentication manager in accordance with the instant disclosure.;
FIG. 4 is a block diagram of a representative processing device that may be used to implement an authentication manager in accordance with the instant disclosure;
FIG. 5 is a flowchart illustrating operation of a mobile wireless device in accordance with the instant disclosure;
FIG. 6 is an illustration of a representative item label comprising identification codes corresponding to the item in accordance with the instant disclosure;
FIG. 7 is an illustration of a representative graphical user interface that may be used to send at least one identification code from a mobile wireless device to an authentication manager in accordance with the instant disclosure;
FIGs. 8 and 9 are illustrations of representative graphical user interfaces that may be used to authentication information received by a mobile wireless device from an authentication manager in accordance with the instant disclosure;
FIG. 10 is a flowchart illustrating operation of an authentication manager in accordance with the instant disclosure;
FIG. 11 is an illustration of a representative graphical user interface that may be used to provide enrollment information to an authentication manager in accordance with the instant disclosure;
and
FIG. 12 is an illustration of a representative graphical user interface that may be used to generate reports in accordance with the instant disclosure.

### DETAILED DESCRIPTION OF THE PRESENT EMBODIMENTS

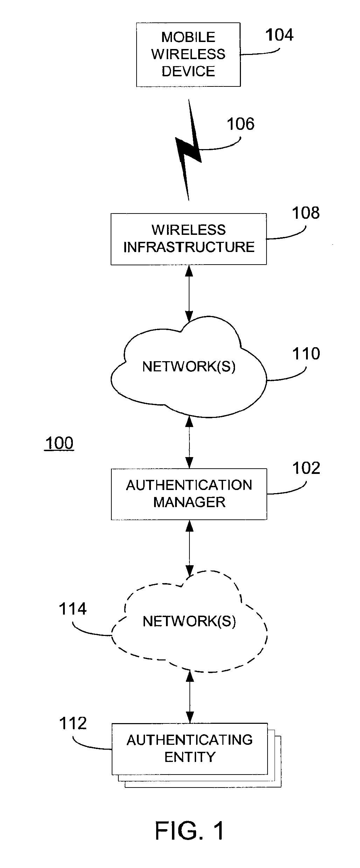

Referring now to FIG. 1, a system 100 comprising an authentication manager 102 and at least one mobile wireless device 104 (only on shown for simplicity) is illustrated. As shown, the authentication manager 102 communicates with the at least one wireless device via intervening wireless communication channels 106 and infrastructure 108 and one or more networks 110. For example, the authentication manager 102 may comprise one or more server computers capable of implementing a Web-based user interface and implementing back end processing and data storage functions, as known in the art. The mobile wireless device 104 may comprise any device capable of easy portability and wireless communications including, by way of example and not limitation, cellular telephones, wireless-equipped personal digital assistants or handheld computers, etc. As known in the art, the wireless channels 106 may comprise radio frequency (RF) channels supporting any of a number of well known wireless communication protocols that allow communication with the wireless infrastructure 108. The wireless infrastructure 108, as also known in the art, may comprise various components capable of supporting the wireless communication protocols such as cellular telephone infrastructure. Equally important, the wireless infrastructure comprises suitable gateways that provide connectivity with other devices or systems via the one or more networks 110 including public networks such as the Internet or World Wide Web, private wide area or local area networks, combinations thereof, etc. Regardless, as described in greater detail below, the mobile wireless device 104 communicates with the authentication manager 102 in order to authenticate one or more identification codes associated with various items.

As further illustrated in FIG. 1, the authentication manager 104 communicates with one or more authenticating entities 112, optionally via one or more networks 114, when obtaining enrollment data for users of the service provided by the authentication manager 102 and when assisting the authentication manager 102 authenticate identification codes received from the mobile wireless device 104. In practice, the authenticating entities 112 may comprise those parties interested in authenticating identification codes associated with items. Once again referring to the example of medical items (e.g., pharmaceuticals, medical devices, etc.), authenticating entities may comprise manufacturers, distributors or government agencies charged with enforcing laws pertaining to the approval of medical items (e.g., the U.S. Food & Drug Administration) or investigating criminal activities associated with medical items (e.g., the U.S. Drug Enforcement Agency). By having the authentication manager 102 act as an intermediary between those parties requesting authentication of one or more identification codes, the authenticating entities 112 may retain control over its proprietary data. To further enhance user and data security, the optional network(s) 114 may comprise any suitable and well known access control technologies, certificate/encryption functionality, etc. It is further possible that the authentication manager 102 is implemented, and therefore controlled by, an authenticating entity directly. In this case, the network(s) 114 may not be required as direct access to the necessary data is possible, i.e., the authentication manager 102 may be implemented within a secure environment in its entirety.

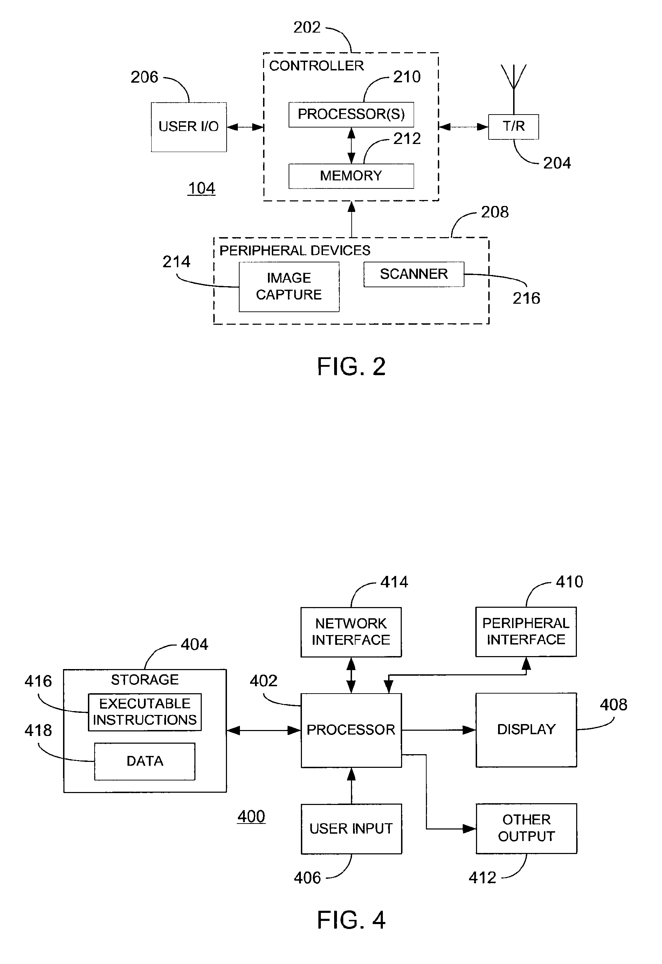

Referring now to FIG. 2, a representative (and simplified) implementation of a mobile wireless device 104 in accordance with the instant disclosure is shown. In particular, the mobile wireless device 104 comprises a controller 202 coupled to a transceiver 204, user input/output devices 206 and one or more peripheral device 208. Typically, the controller 202 comprises one or more processors 210 (such as microprocessors, microcontrollers, digital signal processors, coprocessors, etc.) coupled to one or more memory devices 212 (such as volatile or non-volatile memory) having stored thereon instructions that may be executed by the one or more processors 210 to control operation of the device 104. As known in the art, the user input/output devices 206 may include a microphone, keypad, touch screen, display, speaker, indicator lights, etc. The transceiver 204 transmits and receives information using wireless channels 106. The peripheral devices 208 extend the basic communication capabilities of the mobile wireless device 104 and, in the illustrated examples, comprise an image capture device 214 and/or scanner 216. The image capture device 214 may comprise a suitable digital camera and associated circuitry capable of capturing digital images, as known in the art. The scanner 216 may comprise a bar code reader capable of reading one-dimensional and/or two-dimensional bar codes, as known in the art. Both the image capture device 214 and scanner 216 may be integral to the mobile wireless device 104 (in the sense of being housed with the other components forming the mobile wireless device) or may be externally coupled to the mobile wireless device 104. In the latter case, for example, the image capture device may comprise a separate, stand alone digital camera that may be coupled to the mobile wireless device thereby allowing images to be downloaded or otherwise transferred from the digital camera to the mobile wireless device 104.

As known in the art, the memory 212 may comprise one or more user applications used to control operation of the mobile wireless device 104. In particular, such applications may include any of a number of well-known mobile emailing or short message service (SMS) or texting applications. In conjunction with such applications, and as described in greater detail below, the user inputs 206 may be employed to enter alphanumeric text corresponding to one or more identification codes, particularly human-readable serial numbers or the like, for a given item. Likewise, the image capture device 214 may be employed to capture a digital image of a bar code, or the scanner 216 may be employed to read a bar code directly.

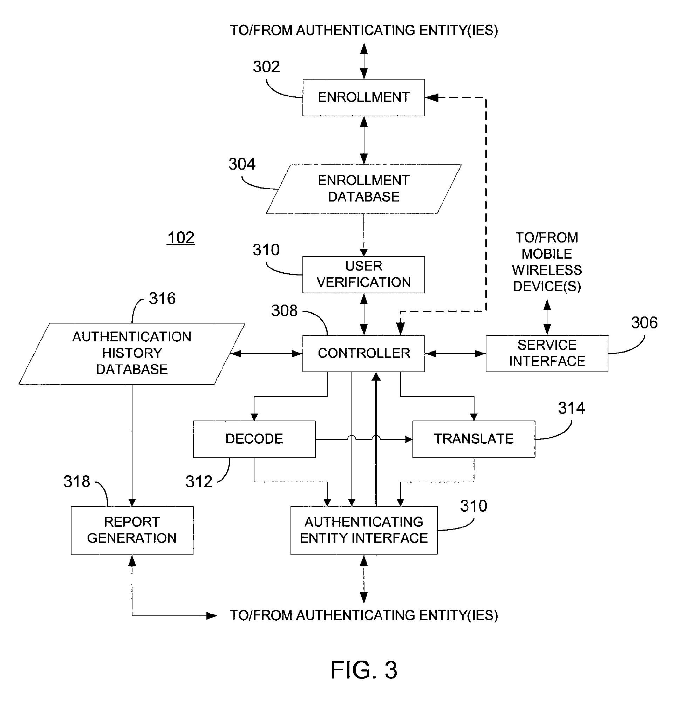

Referring now to FIG. 3, a representative embodiment of an authentication manager in accordance with the instant disclosure is illustrated in greater detail. In one embodiment, the authentication manager 104 may be implemented using one or more suitably programmed server computers or the like. For example, servers may be dedicated to providing suitable web pages for allowing administrators and/or service user to interact with the authentication manager 104. Other servers could be dedicated to implementing the authentication-related functionality described herein, whereas database servers implementing a suitable database management system (DBMS) may be provided for storing data used in the authentication process. Those having ordinary skill in the art will appreciate that other, functionally equivalent configurations of one or more computers may also be employed as a matter of design choice.

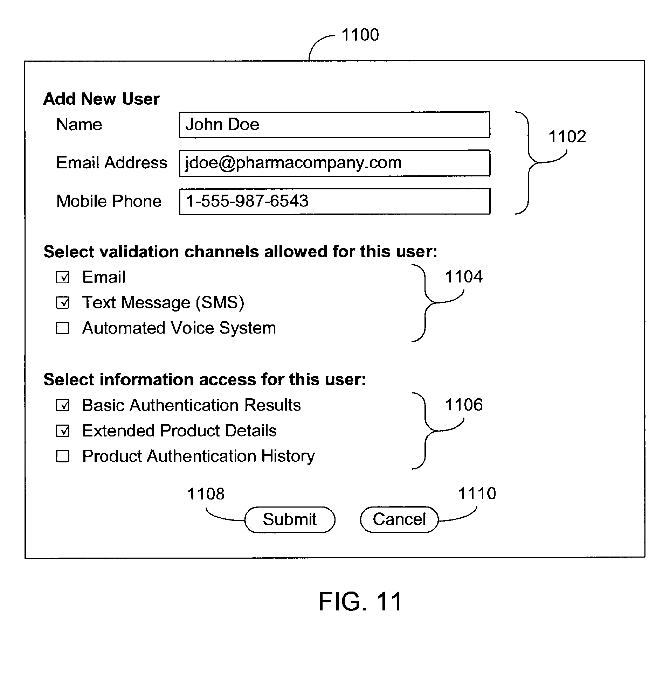

As shown, the authentication manager 102 comprises an enrollment component in communication with an enrollment database 304. The enrollment component 302 may implement a user interface for gathering enrollment information from one or more authenticating entities. A representative graphical user interface for this purpose is illustrated in FIG. 11 as described in further detail below. The enrollment information, which may be stored in any suitably convenient format in the enrollment database 304, comprises information that allows specific users or mobile devices to be verified as being permitted to access the authentication services provided by the authentication manager 102.

A service interface component 306 is provided to implement the necessary interface to communicate with mobile wireless devices as described herein. While the service interface component 306 may implement any suitable function for allowing the authentication manager 102 to receive data from wireless mobile devices, in presently contemplated embodiment, the service interface component 306 implements at least one of an email interface and an SMS interface. That is, by virtue of the service interface component 306, the authentication manager 104 is capable of receiving email and/or text messages from a mobile wireless device by which authentication service is requested.

Operably coupled to the service interface component 306, a controller component 308 is provided to at least control those functions of the authentication manager 104 associated with the authentication of received information concerning identification codes. As illustrated by the dotted line, the controller component 308 may also be used to control operation of the enrollment component 302. In particular, the controller component 308 receives, via the service interface component 306, eligibility verification information from a mobile wireless device. The eligibility verification information may comprise any data necessary to allow the authentication manager 104 to verify the eligibility of the mobile wireless device (and/or a user thereof) to engage the authentication services and thereby receive authentication information. Upon receiving the eligibility verification information, the controller component 308 provides the eligibility verification information to a user verification component 310 that compares the eligibility verification information with the previously-stored enrollment data. When, using conventional verification techniques, it is determined that the eligibility verification information presents a sufficient match to at least some portion of the enrollment data, the user verification component 310 provides an indication of same to the controller component 308, indicating that further processing may proceed.

Assuming that a given mobile wireless device/user is verified, the controller component 308 then passes an received information concerning one or more identification codes to an authenticating entity via the authenticating entity interface component 310. In one embodiment, in which communications with the authentication manager 102 are mediated by one or more networks as described above, the authenticating entity interface component 310 may comprise a suitable network interface. Prior to sending the information concerning one or more identification codes, it may be necessary to first process the information such that it is in a form suitable for transmission to the authenticating entity. For example, in one embodiment, it may be desirable to represent any information concerning an identification code to an authenticating entity in the so-called Serialized Global Trade Identification (SGTIN) or Electronic Product Code (EPC) formats. In those instances in which the information concerning one or more identification codes is received directly from the mobile wireless device in the appropriate format, then the controller component 308 may provide the information concerning one or more identification codes directly to the authenticating entity interface component 310 as shown. However, in some instances, it may be necessary to decode and/or translate the information concerning one or more identification codes before sending it on to the authenticating entity. To this end, the authentication manager 104 may also comprise at least one decoding component 312 and/or at least one translation component 314. The decoding component(s) 312 take as input images of bar codes or the like and decode them in accordance with well know techniques. In a similar vein, the translation component(s) 314 use well known techniques to translate the information concerning one or more identification codes into the desired format. Further still, the decoding component(s) 312 and translation component(s) 314 may be used in conjunction in those instances in which a received bar code image, once decoded, results in data requiring further translation. Regardless of what processing, if any, performed on the information concerning the one or more identification codes, the authenticating entity interface component 310 sends it to the authenticating entity and subsequently receives authentication information (and, optionally, additional information concerning the item from which the at least one identification code is presumably taken) from the authenticating entity, which it thereafter sends to the controller component 308 for subsequent transmission, via the service interface component 306, back to the mobile wireless device.

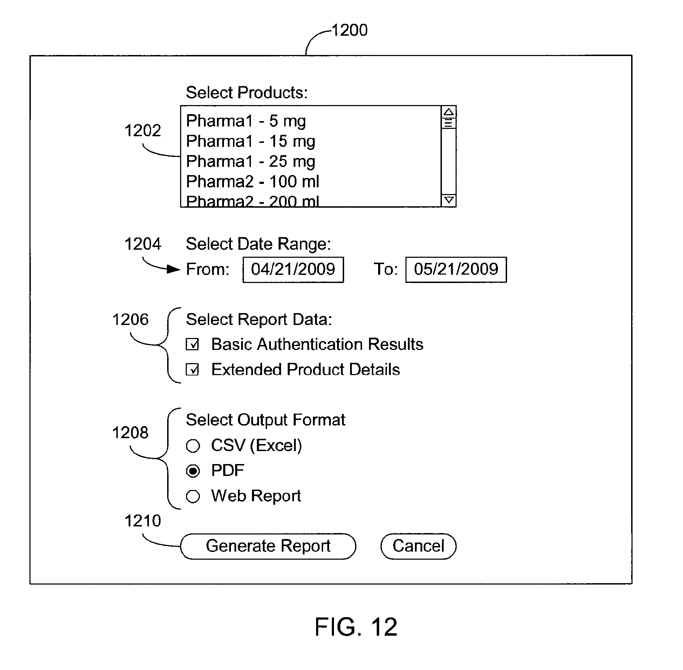

Furthermore, as shown, the controller component 308 maintains an authentication history database 316 that may be used to store non-confidential data concerning substantially every authentication transaction performed by the authentication manager 104. In an embodiment, the authentication history database 316 comprises information about each authentication performed, e.g., the date/time an authentication was requested, the specific identification code(s) (such as serial numbers) for which authentication was requested, identification of the requesting user/mobile wireless device (via, for example, the calling party phone number or email address) as well as the authentication information determined in response to the request. In this manner, upon suitable request or upon occurrence of specified events, some portion of the authentication history may be provided to an authorized user/mobile wireless device via the controller component 308 and service interface 306. Alternatively, the authentication manager 104 may comprise a report generation component 318 in communication with the authentication history database 316. In one embodiment, the report generation component 318 may implement a suitable user interface (such as the representative graphical user interface illustrated in FIG. 12 and described in further detail below) through which reports concerning the authentication history may be generated.

FIG. 4 illustrates a representative processing device 400 that may be used to implement the teachings of the instant disclosure. The device 400, which may be embodied in one or more server computers, may be used to implement, for example, the authentication manager 104 as described in above. Regardless, the device 400 comprises a processor 402 coupled to a storage component 404. The storage component 404, in turn, comprises stored executable instructions 416 and data 418. In an embodiment, the processor 402 may comprise one or more processing devices such as a microprocessor, microcontroller, digital signal processor, or combinations thereof capable of executing the stored instructions 416 and operating upon the stored data 418. Likewise, the storage component 404 may comprise one or more devices such as volatile or nonvolatile memory including but not limited to random access memory (RAM) or read only memory (ROM). Processor and storage arrangements of the types illustrated in FIG. 4 are well known to those having ordinary skill in the art. In one embodiment, at least some of the processing techniques described herein are implemented as a combination of executable instructions and data within the storage component 404.

As shown, the device 400 may comprise one or more user input devices 406, a display 408, a peripheral interface 410, other output devices 412 and a network interface 414 in communication with the processor 402. The user input device 206 may comprise any mechanism for providing user input to the processor 402. For example, the user input device 406 may comprise a keyboard, a mouse, a touch screen, microphone and suitable voice recognition application or any other means whereby a user of the device 400 may provide input data to the processor 402. The display 408, may comprise any conventional display mechanism such as a cathode ray tube (CRT), flat panel display, or any other display mechanism known to those having ordinary skill in the art. The peripheral interface 410 may include the hardware, firmware and/or software necessary for communication with various peripheral devices, such as media drives (e.g., magnetic disk or optical disk drives), other processing devices or any other input source used in connection with the instant techniques. Likewise, the other output device(s) 412 may optionally comprise similar media drive mechanisms, other processing devices or other output destinations capable of providing information to a user of the device 400, such as speakers, LEDs, tactile outputs, etc. Finally, the network interface 414 may comprise hardware, firmware and/or software that allows the processor 402 to communicate with other devices via wired or wireless networks, whether local or wide area, private or public, as known in the art.

While the device 400 has been described as one form for implementing the techniques described herein, those having ordinary skill in the art will appreciate that other, functionally equivalent techniques may be employed. For example, as known in the art, some or all of the executable instruction implemented functionality may be implemented using firmware and/or hardware devices such as application specific integrated circuits (ASICs), programmable logic arrays, state machines, etc. Further still, other implementations of the device 400 may include a greater or lesser number of components than those illustrated. Once again, those of ordinary skill in the art will appreciate the wide number of variations that may be used is this manner.

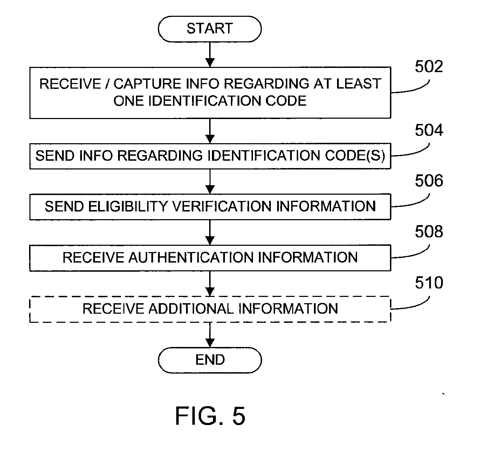

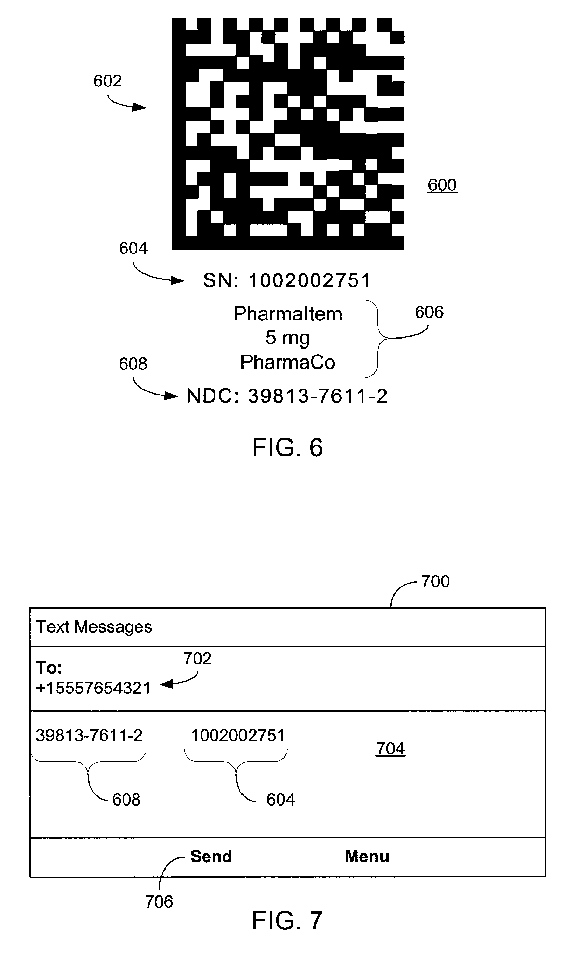

Referring now to FIG. 5, a flowchart illustrating operation of a mobile wireless device in accordance with the instant disclosure is provided. In an embodiment, the processing illustrated in FIG. 5 is carried out using stored instructions executed by one or more processors within a mobile wireless device. Regardless, processing begins at block 502 where the mobile wireless device receives and/or captures information concerning one or more identification codes associated with an item under consideration. A representative item label 600 comprising a variety of identification codes is illustrated in FIG. 6. In particular, the label 600 comprises a two-dimensional bar code 602 and an alphanumeric serial number 604. Furthermore, as an example specific to the pharmaceutical industry, the label 600 comprises a textual description 606 of the item as well as an alphanumeric National Drug Code (NDC) 608. The label 600 may be embodied as a printed label that is applied to a surface of an item, such as external packaging. However, it is understood that the label 600 may implemented according any of a number of well known techniques, such as direct printing, etching or other marking on the item itself. As noted above, various techniques can be used to input the identification code(s) 602, 604, 608 into the mobile wireless device. For example, using a keypad or touch screen on the mobile wireless device, the serial number 604 or, in this example, the NDC 608 may be directly entered as alphanumeric text. Alternatively, an image may be obtained of the bar code 602, when provided, using an image capture device, or the bar code may be directly read using an appropriate scanner.

Regardless, processing continues at block 504 where the information concerning the one or more identification codes is sent by the mobile wireless device to the authentication manager. An example of a graphical user interface 700 that may be implemented by the mobile wireless device is further illustrated in FIG. 7. The graphical user interface 700 is in the style of an SMS or text message interface in which a user may enter a destination address expressed, in this instance, as a telephone number for an authentication manager. As known in the art, other addressing forms, such as email addresses, may also be used for this purpose. In one embodiment, the authentication manager may have multiple telephone numbers (or email addresses, etc.) such that users/mobile devices affiliated with each authenticating entity may use a number or address that is uniquely assigned to that authenticating entity. For example, users enrolled on behalf of a first authenticating entity (e.g., a pharmaceutical company) are only allowed to use the number/address assigned to the first authenticating entity, whereas user enrolled on behalf of a second authenticating entity (e.g., a government agency) are only allowed to use the number/address assigned to the second authenticating entity. The graphical user interface 700 also comprises a text entry area 704 where the user is able to enter information concerning the one or more identification codes associated with an item under consideration. In the illustrated example, the user has entered both the NDC 608 and serial number 604 in the text entry area 704. Conventional control mechanisms, such as "send" button 706, allow the user to send the text message to the authentication manager once message has been composed.

Referring again to FIG. 5, at block 506, the mobile wireless device also sends eligibility verification information to the authentication manager. Although illustrated as being separate from block 504, those having ordinary skill in the art will appreciate that, in practice, the mobile wireless device may include both the eligibility verification information and the information concerning the one or more identification codes in a single request message or split into multiple messages sent to the authentication manager. The eligibility verification information may comprise information associated with a particular user, such as the user's name, a password or identification number assigned to the user, the user's email address, etc. Alternatively, the eligibility verification information may comprise information associated with the mobile wireless device itself such as the device's telephone number, serial number, etc.

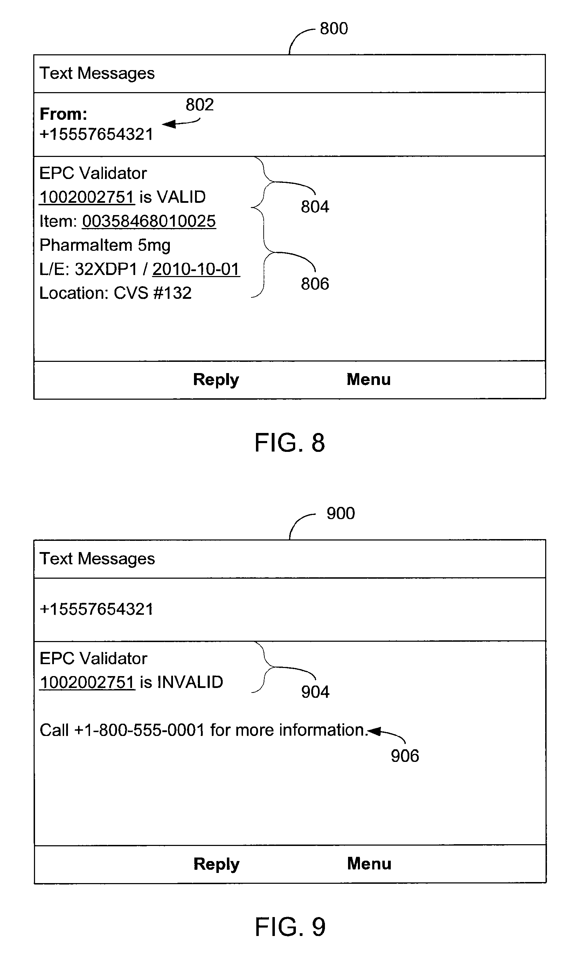

Having sent both the information concerning the one or more identification codes and the eligibility verification information, processing continues at block 508 where the mobile wireless device receives authentication information (and, optionally at block 510, additional information) from the authentication manager. In one embodiment, the authentication information comprises and indication whether or not the information concerning the at least one identification code is authentic (valid) or not. As used herein, an authentic or valid indication implies that all of the information concerning the at least one identification code corresponds to or matches legitimate data as determined by the authenticating entity. An invalid indication is received if any portion of the information concerning the at least one identification code does not correspond to legitimate data or is otherwise inconsistent with the legitimate data (as in the case, for example, where a user provides an otherwise valid serial number and NDC that are not typically associated with one another). Examples of these two alternatives are further illustrated in FIGs. 8 and 9. The additional information received at block 510 may comprise information that will further assist the user of the mobile wireless device. For example, in the case of a valid indication, the additional information may comprise: additional identifying characteristics or descriptive information of the item, lot numbers and/or expiration dates, anticipated location information for the item or a validation history relevant to the item. In the case of an invalid indication, the additional information may comprise a contact number for the user to call the authenticating entity, for example, to further report the circumstances concerning the item in question.

In FIG. 8, a graphical user interface 800 is shown in which a text message from the authentication manager (as indicated by the "from" field 802) has been received. In this case, the authentication information 804 comprises a valid indication. Conversely, a graphical user interface 900 is illustrated in FIG. 9 in which the authentication information 904 comprises an invalid indication. In both FIGs. 8 and 9, additional information 806, 906 is illustrated. In former, the additional information 806 comprises an item type or category number, a textual name ("Pharmaltem") and description of the item ("5 mg"), lot and expiration date information as well as expected location information ("CVS #132"). Such additional information may be used by the user of the mobile wireless device to further authenticate the item in question. For example, if the name on or description of the item does not match the additional information, then it is possible that legitimate identification codes were used to falsely label suspect items. Furthermore, if the expected location information does not match the actual location were the item was found, this may be an indication that an otherwise legitimate items was improperly diverted from its intended destination. In situations such as these, the user of the mobile wireless device may contact the authenticating entity to report the problem. In FIG. 9, in which the authentication information 904 comprises an invalid indication, the additional information 904 may comprise contact information, such as a telephone number, that allows the user to further report the circumstances concerning the item in question.

It is noted that, while the examples above dealt with text or SMS user interfaces for authenticating an item, an email interface could be equally employed. For example, the information concerning the at least one identification code 604, 608 entered via the SMS interface 700 could also be entered as test in the body of an email addressed to the authentication manager. Furthermore, a digital image file of an identification code 602 can be attached to an email message in a conventional manner and likewise sent to the authentication manager.

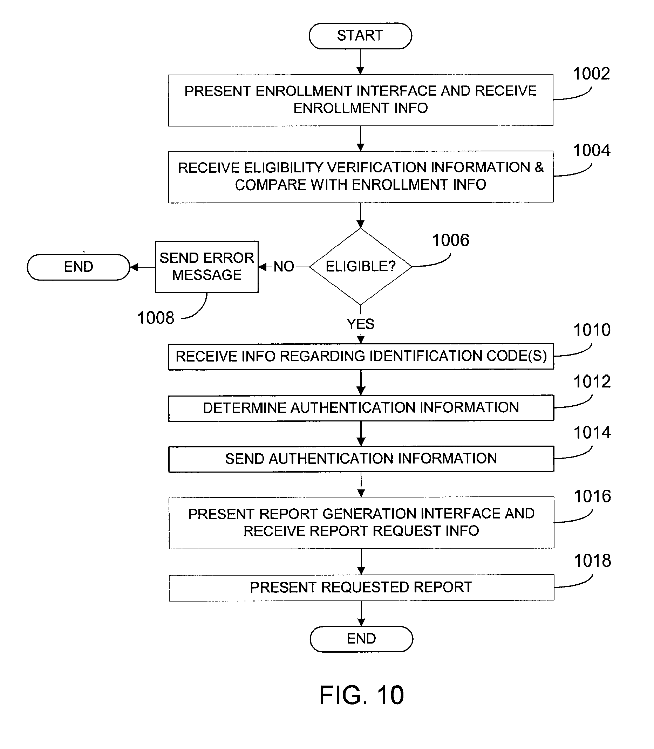

Referring now to FIG. 10, a flowchart illustrating operation of an authentication manager in accordance with the instant disclosure is illustrated. In an embodiment, the processing illustrated in FIG. 10 is carried out using stored instructions executed by one or more processors within an authentication manager. Regardless, processing begins at block 1002 where the authentication manager presents an enrollment interface and receives enrollment information from an authenticating entity. An example of this is illustrated in FIG. 11 where a graphical user interface 1100 for use in obtaining enrollment information is illustrated. As shown, the interface comprises first data input mechanisms 1102 (in the form of text entry boxes) through which an authenticating entity can input user-specific information such name, email address and mobile phone number. Still other types of user-specific information not illustrated could also be accommodated in this manner. Second data input mechanisms 1104 are provided (in the form of check boxes) that allow the authenticating entity to specify the types of communication channels that may be used by this user when seeking authentication services. Third data input mechanisms 1106 (also in the form of check boxes) are provided to allow the authenticating entity to designate the types of information that may be accessed by the user. In the illustrated example, the user is allowed to receive the basic authentication results (i.e., the valid/invalid indications) as well as the extended product details in the form of the additional information described above; however, the user is not allowed to receive the product authentication history. Once completed, the data entered via the interface 1100 may be submitted as enrollment data by selecting a "submit" button 1108 or canceled through selection of the "cancel" button 1110. Although not shown in the Figures, prior to being presented the interface 1100 for adding new users, an authenticating entity may be required to first establish an account with authenticating manager by specifying similar enrollment information, e.g., a name of authenticating entity, a main point of contact within the authenticating entity and an indication that terms and conditions for working with the authentication manager have been accepted. Furthermore, to the extent that the authentication manager needs to interact with the authenticating manager, the authenticating entity needs to provide the authentication manager the necessary privileges and permissions communicate with the authenticating entity when performing authentication as described above.

Referring once again to FIG. 10, processing continues at block 1004 where the authentication manager receives eligibility verification information from a mobile wireless device, as described above, and compares it with the previously obtained enrollment information. If, at block 1006, it is determined that the requesting user is not eligible to request authentication, processing continues at block 1008 where an error message is sent to the user. Alternatively, if the user is eligible, processing continues at block 1010 where the authentication manager receives information regarding one or more identification codes from the mobile wireless device. As noted above, in practice, both the eligibility verification information and the information regarding the at least one identification code can be included in a single message or split among multiple messages from the mobile wireless device. Thereafter, at block 1012, the authentication manager determines the authentication information based on the information regarding the at least one identification code. As previously described, this may require some decoding and/or translation of the information regarding the at least one identification code and the transmission of the information regarding the at least one identification code to the authenticating entity. Note that, in an embodiment, the authenticating entity to receive the information regarding the at least one identification code is identified according to the affiliation of the requesting user to an authenticating entity, i.e., all information regarding the at least one identification code received from User A affiliated with Manufacturer X will be handled by Manufacturer X as the authenticating entity. In the example described above where each authenticating entity is assigned unique contact information for communicating with the authentication manager, rapid determination of the proper authenticating entity can be achieved by noting the address, telephone number, etc. used by the mobile wireless device to contact the authentication manager. Subsequently, at block 1012, the authentication manager receives the authentication information (as well as any additional information, if provided) from the authenticating entity. Thereafter, the authentication manager sends the authentication information and additional information (presuming that the enrollment data indicates that the user is permitted to receive it) to the mobile wireless device at block 1014.

As further shown in FIG. 10, the authentication manager may present a report generation interface, at block 1016, to an authenticating entity. An example of this is illustrated in FIG. 12, where a graphical user interface 1200 is shown. In this example, based on a pharmaceutical application, a scrolling selection box 1202 is provided that allows an authorized user within the authenticating entity to select a particular product (or item) for which a report is desired. Likewise, a data range 1204 may be specified, as well as the specific types of data 1206 to be included in the report and the desired report format 1208. Upon submitting these inputs, through selection of the "Generate Report" button 1210, the authentication manager will gather data from the authentication history database, as noted above, according to the selected criteria 1202, 1204 and generate the report in the desired format 1208, as shown at block 1018. In an embodiment, the data included in the report may be organized according to specific data in the report. For example, data pertaining to each authentication request could be grouped according to specific identification codes for which such requests were made. As a further example, the report data could be organized according to requests submitted by the requesting user's name/identification. Regardless of the manner in which it is organized, the resulting report may be displayed via another interface or sent to the requesting user using conventional means, e.g., email, link to a downloadable file, etc.

As described above, the instant disclosure describes techniques for authenticating items comprising at least one identification code using conventional communication channels, thereby permitting authentication capability to be widely and efficiently deployed.. In particular, an authentication manager is provided that mediates communications between mobile wireless devices used to convey information regarding identification codes found on items and the authenticating entities having access to the confidential information needed to authenticate the identification codes. As a result, authentication can be beneficially applied to those situations where access to the supply chain is difficult, and can be used as an "end of the line" technique permitting in-the-field spot checking where it is most likely needed. For at least these reasons, the above-described techniques represent an advancement over prior art teachings.

While particular preferred embodiments have been shown and described, those skilled in the art will appreciate that changes and modifications may be made without departing from the instant teachings. For example, reference has been made throughout the instant disclosure to the use of the teachings described herein to medical items, particularly pharmaceutical items. However, it is understood that the instant teachings may be applied to virtually any item for which remote authentication would be desirable. It is therefore contemplated that any and all modifications, variations or equivalents of the above-described teachings fall within the scope of the basic underlying principles disclosed above and claimed herein.

## Claims

1. A method for authenticating an item comprising at least one identification code, the method comprising:
sending, by a mobile wireless device to an authentication manager, information regarding the at least one identification code; and
receiving, by the mobile wireless device from the authentication manager in response to the information regarding the at least one identification code, authentication information corresponding to the at least one identification code.

2. The method of claim 1, further comprising:
receiving, by the mobile wireless device, alphanumeric text constituting the information regarding the at least one identification code.

3. The method of claim 1 or 2, wherein the information regarding the at least one identification code further comprises at least one image of the at least one identification code, the method further comprising:
capturing, by an image capture device associated with the mobile wireless device, the at least one image.

4. The method of any of claims 1 to 3, wherein sending the information regarding the at least one identification code further comprises sending at least one of an email message and a short message service message.

5. The method of any of claims 1 to 4, wherein sending the information regarding the at least one identification code further comprises sending eligibility verification information that permits determination whether the wireless device is permitted to receive the validity indication.

6. A method for authenticating an item comprising at least one identification code, the method comprising:
receiving, by an authentication manager from a mobile wireless device, information regarding the at least one identification code;
determining, by the authentication manager, authentication information regarding the at least one identification code; and
sending, by the authentication manager to the mobile wireless device in response to the information regarding the at least one identification code, the authentication information corresponding to the at least one identification code.

7. The method of claim 6, wherein receiving the information regarding the at least one identification code further comprises receiving alphanumeric text input by a user of the mobile wireless device, wherein determining the authentication information further comprises:
sending, by the authentication manager to an authenticating entity, the information regarding the at least one identification code; and
receiving, by the authentication manager from the authenticating entity based on the information regarding the at least one identification code, the authentication information.

8. The method of claim 6 or 7, wherein determining the authentication information further comprises:
translating, by the authentication manager, the information regarding the at least one identification code to provide at least one translated identification code;
sending, by the authentication manager to an authenticating entity, the at least one translated identification code; and
receiving, by the authentication manager from the authenticating entity based on the at least one translated identification code, the authentication information.

9. The method of any of claims 6 to 8, wherein determining the authentication information further comprises:
decoding, by the authentication manager, at least one image constituting the information regarding the at least one identification code to provide at least one decoded identification code;
sending, by the authentication manager to an authenticating entity, the at least one decoded identification code; and
receiving, by the authentication manager from the authenticating entity based on the least one decoded identification code, the authentication information.

10. The method of any of claims 6 to 9, wherein receiving the information regarding the at least one identification code further comprises receiving eligibility verification information, the method further comprising:
prior to determining the authentication information, determining, by the authentication manager based on the eligibility verification information, that the wireless device is permitted to receive the validity indication.

11. The method of claim 10, further comprising:
receiving, by the authentication manager from an authenticating entity, enrollment information,
wherein determining that the wireless device is permitted to receive the authentication information further comprises determining that the eligibility verification information compares favorably with the enrollment information.

12. A mobile wireless device, comprising:
a wireless transceiver;
at least one processor adapted to communicate with the wireless transceiver; and
memory adapted to communicate with the at least one processor and having stored therein instructions that, when executed by the at least one processor, cause the at least one processor to:
send, via the wireless transceiver to an authentication manager, information regarding the at least one identification code; and
receive, via the wireless transceiver from the authentication manager in response to the information regarding the at least one identification code, authentication information corresponding to the at least one identification code.

13. The mobile wireless device of claim 12, further comprising an image capture device adapted to communicate with the at least one processor, wherein the memory further comprises instructions that, when executed by the at least one processor, cause the at least one processor to:
capture, by the image capture device, at least one image of the at least one identification code, wherein the at least one image constitutes the information regarding the at least one identification code.

14. An authentication manager, comprising:
a service interface component adapted to receive, from a mobile wireless device, information regarding at least one identification code associated with an item;
an authenticating entity interface component; and
a controller operably coupled to the service interface component and the authenticating entity interface component and adapted to send the information regarding the at least one identification code to an authenticating entity via the authenticating entity interface component, and receive authentication information from the authenticating entity in response to the information regarding the at least one identification code via the authenticating entity interface component.

15. The authentication manager of claim 14, further comprising:
a translation component operably coupled to the controller and adapted to translate the information regarding the at least one identification code to provide at least one translated identification code,
wherein the controller is further adapted to send the at least one translated identification code to the authenticating entity and receive the authentication information from the authenticating entity in response to the at least one translated identification code.

16. The authentication manager of claim 14 or 15, further comprising:
a decoding component operably coupled to the controller and adapted to decode at least one image constituting the information regarding the at least one identification code to provide at least one decoded identification code,
wherein the controller is further adapted to send the at least one decoded identification code to the authenticating entity and receive the authentication information from the authenticating entity in response to the at least one decoded identification code.

17. The authentication manager of any of claims 14 to 16, further comprising:
an enrollment component adapted to receive, from the authenticating entity, enrollment information and to store the enrollment information in an enrollment database; and
a user verification component operably coupled to the controller and the enrollment database and adapted to determine that the wireless device is permitted to receive the authentication information when eligibility verification information, received by the user verification component via the controller and the service interface from the mobile wireless device, compares favorably with the enrollment information.

18. A system comprising:
at least one mobile wireless device; and
an authentication manager operably coupled to the at least one mobile wireless device,
wherein each of the at least one mobile wireless device is adapted to send information regarding at least one identification code associated with an item to the authentication manager and receive, from the authentication manager in response to the information regarding the at least one identification code, authentication information corresponding to the at least one identification code.
